# EUROPÄISCHE PATENTSCHRIFT

(11) **EP 0 425 599 B1**
(45) Veröffentlichungstag und Bekanntmachung des Hinweises auf die Patenterteilung: **27.10.1993**
(21) Anmeldenummer: 90904227.7
(22) Anmeldetag: 16.03.1990
(51) Int. Cl.: E02B 15/04

(54) **VERFAHREN UND VORRICHTUNG ZUM ENTFERNEN EINER AUF EINER GRUNDWASSEROBERFLÄCHE SCHWIMMENDEN, FLÜSSIGEN PHASE**
PROCESS AND DEVICE FOR REMOVING A LIQUID PHASE FLOATING ON THE SURFACE OF A WATER TABLE
PROCEDE ET DISPOSITIF POUR ELIMINER UNE PHASE LIQUIDE FLOTTANT A LA SURFACE D'UNE NAPPE D'EAU SOUTERRAINE

(30) Priorität: 22.03.1989 DE 3909372
(43) Veröffentlichungstag der Anmeldung: 08.05.1991
(73) Patentinhaber: PREUSSAG AKTIENGESELLSCHAFT, 30625 Hannover (DE)
(72) Erfinder: BÖCKLE, Rüdiger, D-6103 Griesheim (DE)
(86) Internationale Anmeldenummer: DE9000199
(87) Internationale Veröffentlichungsnummer: WO9011410

(56) Entgegenhaltungen:
- EP-A- 0 210 164
- AT-B- 379 120
- DE-A- 3 721 981
- US-A- 4 273 650

## Beschreibung

Die Erfindung betrifft ein Verfahren und eine Vorrichtung zum Entfernen einer auf einer Grundwasseroberfläche schwimmenden, flüssigen Phase der im Oberbegriff der Patentansprüche 1 bzw. 2 angegebenen Art.

Bei einem aus der AT-B-379 120 bekannten Verfahren der angegebenen Art wird mit Hilfe einer Pumpe, deren Lauf bzw. Stillstand mittels Niveaufühlern gesteuert wird, der Grundwasserspiegel im Brunnenschacht abgesenkt und ständig auf einem vorgegebenen Niveau gehalten. In den Brunnenschacht wird mit Hilfe einer Hubvorrichtung bis unter das Niveau des Grundwasserspiegels eine Ölfangeinrichtung abgesenkt, die aus einem Behälter mit Einlauföffnungen besteht, der mittels Streben an dem Steigrohr einer Schmutzwasserpumpe befestigt ist, die sich im Inneren des Behälters befindet. Durch die Lage der Ölfangeinrichtung in einem bestimmten Abstand unterhalb des Grundwasserspiegels tritt hauptsächlich das in dem Brunnenschacht obenauf schwimmende Mineralöl in den Behälter ein, aus dem es mittels der Schmutzwasserpumpe über das Steigrohr und einen Druckschlauch in einen am Kopf des Brunnenschachts angeordneten Ausgleichsbehälter gefördert wird. Der Lauf der Schmutzwasserpumpe bzw. ihr Stillstand wird von Niveaufühlern gesteuert, die am Ausgleichsbehälter angeordnet sind, so daß nur jene Schmutzwassermenge in den Ausgleichsbehälter gefördert werden kann, die in einer an den Ausgleichsbehälter angeschlossenen Reinigungsanlage bei gegebener Durchflußgeschwindigkeit bearbeitet wird. Bei diesem bekannten Verfahren müssen durch unterschiedlichen Zulauf bedingte Niveauschwankungen des Grundwasserspiegels über die Förderleistung der Unterwasserpumpe ausgeglichen werden.

Ein ähnliches Verfahren ist aus der US-A-4 273 650 bekannt. Hierbei erfolgt das Abpumpen der mit öl verunreinigten Phase unmittelbar mit Hilfe einer in den Brunnenschacht abgesenkten Schmutzwasserpumpe. Der Betrieb der Schmutzwasserpumpe wird automatisch mit Hilfe von Schwimmerschaltern gesteuert, die die Pumpe einschalten, sobald die Einlaßschlitze der Pumpe eingetaucht sind. Anstelle der Schwimmerschalter können auch Wärmeleitfähigkeitssensoren oder Sensoren zur Messung der elektrischen Leitfähigkeit vorgesehen sein.

Zur Entfernung von Öl von einer Mischung aus Öl und Wasser ist aus der EP-A-0 219 164 ein höhenverstellbarer Schöpfbecher mit einer Einlaufkante bekannt, der mittels einer Hubvorrichtung in seiner Höhe so einstellbar ist, daß die Einlaufkante gerade über die Öl-/Wasser-Grenze hervorsteht und somit ein Wehr bildet, über das hauptsächlich Öl in den Schöpfbecher fließt, aus dem es mittels einer Pumpe abgepumpt wird. Bei dieser bekannten Einrichtung wird der Füllstand innerhalb des Schöpfbechers mit Hilfe eines Schwimmers überwacht und bei einer Änderung des Füllstands mit Hilfe der Hubvorrichtung die Höhenlage des Schöpfbechers im Sinne einer Vergrößerung oder Verringerung des Zulaufs von Flüssigkeit über die Einlaufkante geändert. Niveauänderungen auf der Zulaufseite werden bei dieser Einrichtung nur indirekt erfaßt und können daher erst verzögert erkannt und ausgeglichen werden. Weiterhin ist die Eintauchtiefe des Schöpfbechers von der Förderleistung der Pumpe abhängig, die den Schöpfbecher entleert. Die Einrichtung ist daher auf Anwendungen beschränkt, bei denen die Förderleistung der Pumpe im wesentlichen konstant ist und nicht, beispielsweise durch Änderung der Förderhöhe bedingten Schwankungen unterliegt.

Aufgabe der Erfindung ist es, ein Verfahren der eingangs genannten Art anzugeben, mit dem auf einer Grundwasseroberfläche schwimmende, flüssige Phasen ohne Beeinträchtigung durch Niveauänderungen des Grundwasserspiegels unter Beibehaltung der bereits im Boden erfolgten Trennung von Wasser und leichterer Phase in kurzer Zeit und mit geringem Aufwand entfernt werden können. Es ist weiterhin Aufgabe der Erfindung, eine einfache und zuverlässige Vorrichtung zur Durchführung des Verfahrens bereitzustellen.

Diese Aufgabe wird durch das in Patentanspruch 1 angegebene Verfahren gelöst.

Mit dem erfindungsgemäßen Verfahren ist es möglich, eine auf einer Grundwasseroberfläche schwimmende flüssige Phase, beispielsweise Kohlenwasserstoffe getrennt abzupumpen, und damit die bereits im Erdbereich oder im Brunnenschacht erfolgte Abscheidung der flüssigen Phase zu nutzen. Besondere Einrichtungen zum Trennen der flüssigen Phase vom Wasser sind daher übertage entbehrlich. Vorteilhaft ist bei dem erfindungsgemäßen Verfahren weiterhin, daß die Fördergeschwindigkeit, mit der die flüssige Phase abgepumpt werden kann, von der Nachlaufgeschwindigkeit des Grundwassers und der geförderten Grundwassermenge weitgehend unabhängig ist, so daß sich bei günstigem Fließverhalten der flüssigen Phase hohe Förderraten ergeben.

Bei dem erfindungsgemäßen Verfahren kann weiterhin vorgesehen sein, daß das zur Absenkung des Flüssigkeitsspiegels im Brunnenschacht geförderte Grundwasser vor dem Zurückleiten in den Boden gereinigt wird, um im Grundwasser noch gelöste oder suspendierte Schadstoffe zu entfernen. Diese Reinigung läßt sich bei dem erfindungsgemäßen Verfahren einfacher und effektiver durchführen, da das Grundwasser die separat abgepumpte flüssige Phase nicht mehr enthält.

Zur Durchführung des erfindungsgemäßen Verfahrens ist die im Patentanspruch 2 angegebene Vorrichtung besonders geeignet. Mit Hilfe dieser Vorrichtung läßt sich auf einfache Weise die auf dem Grundwasser schwimmende, leichte Phase abschöpfen, wobei die Lage des Behälters mit Hilfe der Hubvorrichtung den Niveauänderungen des Flüssigkeitsspiegels automatisch angepaßt wird, um das Einlaufen von Grundwasser in den Behälter zu verhindern. Die bereits im Boden erfolgte Trennung von Wasser und leichterer Phase wird somit beibehalten und ermöglicht eine Vereinfachung und Beschleunigung der Grundwassersanierung.

Der Behälter kann nach einem weiteren Vorschlag der Erfindung an einer Vertikalführung gelagert sein, die aus im Brunnenschacht befestigten Seilen besteht.

In einer weiteren Ausgestaltung der erfindungsgemäßen Vorrichtung kann vorgesehen sein, daß durch den außen am Behälter unterhalb der Einlauföffnung angeordneten, auf die Grundwasseroberfläche ansprechenden Meßfühler die Hubvorrichtung im Sinne von "Heben" vorrangig steuerbar ist. Erreicht die Grundwasseroberfläche den Meßfühler, so wird der Behälter entsprechende angehoben und damit das Eindringen von Wasser in den Behälter verhindert. Ist die Schicht der schwimmenden Phase dünner als der Abstand zwischen der Einlauföffnung und dem Meßfühler, so wird hierbei gleichzeitig auch das Abschöpfen der schwimmenden Phase unterbrochen.

Um sicherzustellen, daß bei einer Abnahme der Schichtdicke der schwimmenden Phase kein Wasser in den Behälter gelangt, kann erfindungsgemäß außen am Behälter eine Meßvorrichtung angeordnet sein, die den Abstand der Grundwasseroberfläche von der Unterkante der Einlauföffnung überwacht und deren Signal bei Erreichen eines Mindestabstandes das Abpumpen aus dem Behälter unterbricht. Das Entfernen der flüssigen Phase wird hierdurch solange beendet, bis durch Nachfließen der flüssigen Phase aus den den Brunnenschacht umgebenden Schichten die für ein getrenntes Abschöpfen erforderliche Schichtdicke wieder gegeben ist. Zweckmäßigerweise ist hierbei die Förderleistung der Pumpe geringer bemessen als die Einlaufleistung an der Einlauföffnung des Behälters. Der Behälter bleibt somit immer gefüllt.

Zur Erfassung der Grundwasseroberfläche können erfindungsgemäß Leitfähigkeitsfühler vorgesehen sein. Die Meßvorrichtung zum Abschalten der Pumpe kann erfindungsgemäß aus zwei übereinander angeordneten Leitfähigkeitsfühlern bestehen, wobei der obere Fühler unterhalb der Einlauföffnung angeordnet ist und zum Abschalten der Pumpe dient, während der darunterliegende Fühler mit invertiertem Signal die Pumpe wieder einschaltet. Zur Steuerung der Hubvorrichtung in Abhängigkeit vom Flüssigkeitsspiegel, d.h. vom Spiegel der aufschwimmenden Phase ist erfindungsgemäß an der Außenseite des Behälters in Höhe der Einlauföffnung eine Füllstandsmeßvorrichtung angeordnet. Vorzugsweise besteht die Füllstandsmeßvorrichtung aus einem Tauchsondengeber, dessen Sonde und dessen Schwimmer in einer Nische in der Außenseite der Behälterwand angeordnet sind. Die Steuerung der Hubvorrichtung erfolgt mit Hilfe der Füllstandsmeßvorrichtung vorzugsweise derart, daß die Bewegungsgeschwindigkeit der Hubvorrichtung direkt proportional zur Abweichung des gemessenen Füllstands vom Sollwert gesteuert wird. Auf diese Weise kann auch beim plötzlichen raschen Anstieg des Flüssigkeitsspiegels im Brunnenschacht der Behälter ausreichend schnell nachgefahren werden.

Zur Förderung der flüssigen Phase aus dem Behälter ist vorzugsweise in dem Behälter eine Tauchpumpe angeordnet, deren Ausgang durch eine vorzugsweise flexible Förderleitung mit einem übertage angeordneten Sammeltank verbunden ist. Um überwachen zu können, daß von der Pumpe nur die leichte Phase gefördert wird, können nach einem weiteren Vorschlag der Erfindung ein Schaltmanometer und eine Leitfähigkeitssonde an die Förderleitung der Pumpe angeschlossen sein, wobei bei Überschreitung vorgegebener von dem Schaltmanometer oder der Leitfähigkeitssonde gemessener Grenzwerte die Förderleitung mit Hilfe eines Sperrventils sperrbar ist. Wird die schwerere Wasserphase gefördert, so fällt der Druck in der Förderleitung ab, während die Leitfähigkeit zunimmt. Beide Meßwerte ermöglichen somit eine zuverlässige Überwachung und rechtzeitige Unterbrechung der Förderung.

Die dargestellte Anlage besteht aus einem Brunnen 1, aus dem mit einer Tauchpumpe 2 Grundwasser über eine Leitung 3 zu einer nicht dargestellten Grundwasseraufbereitungsanlage gefördert wird. Ein Manometer 4 und ein Durchflußmesser 5 überwachen den Förderstrom in der Leitung 3. Durch die Förderung der Tauchpumpe 2 wird der Grundwasserspiegel im Bereich des Brunnens 1 abgesenkt und es kommt zu einer Gefälleströmung in Richtung auf den Brunnen 1, die eine Ansammlung des auf der Grundwasseroberfläche 6 schwimmenden Öls 7 im Brunnen 1 bewirkt.

Um dieses Öl 7 getrennt vom Wasser aus dem Brunnen fördern zu können, ist ein becherartiger Behälter 8 vorgesehen, der von einem Seil 9 getragen wird und mittels einer motorgetriebenen Seilwinde 10 im Brunnen 1 vertikal bewegbar ist. In der Nähe seines oberen Randes weist der Behälter 8 in seiner Seitenwand mehrere Einlauföffnungen 11 auf, durch die das Öl in den Behälter gelangen kann. Im Innern des Behälters 8 befindet sich eine Tauchpumpe 12, deren Ausgang über eine Leitung 13 mit einem Sammeltank 14 verbunden ist. Im Bereich des Brunnens 1 ist die Leitung 13 durch einen flexiblen Schlauch gebildet, um die vertikale Bewegbarkeit des Behälters 8 zu ermöglichen. Die Leitung 13 ist durch ein Ventil 15 absperrbar. Weiterhin ist in der Leitung 13 ein Abscheider 16 angeordnet, durch den im Förderstrom enthaltenes Wasser abgeschieden und der Grundwasseraufbereitungsanlage zugeführt werden kann.

In Höhe der Einlauföffnungen 11 ist auf der Außenseite des Behälters 8 ein Füllstandsmeßgeber 17 angeordnet, der die Lage des Flüssigkeitsspiegels 18 in Bezug auf den Behälter 8 erfaßt. Durch eine nicht näher dargestellte Regeleinrichtung wird aufgrund der Meßwerte des Füllstandsmeßgebers 17 die Seilwinde 10 derart angesteuert, daß die Einlauföffnungen 11 den Flüssigkeitsspiegel 18 um ein bestimmtes Maß unterschneiden, so daß das Öl 7 in den Behälter 8 einlaufen kann. Ändert sich das Flüssigkeitsniveau im Brunnen 1, so wird dies von dem Füllstandsmeßgeber 17 erfaßt und der Behälter 8 über die Seilwinde 10 entsprechend nachgefahren. Die Steuerung ist dabei so ausgelegt, daß mit zunehmenden Abweichungen des Niveaus vom eingestellten Sollwert die Bewegungsgeschwindigkeit der Seilwinde 10 erhöht wird, damit auch bei vergleichsweise schnellen Niveauänderungen die Lage der Einlauföffnungen 11 im Bereich des Flüssigkeitsspiegels 18 gehalten werden kann.

Die Förderleistung der Tauchpumpe 12 ist so gewählt, daß sie gleich oder kleiner ist als die Zulaufleistung durch die Einlauföffnungen 11. Auf diese Weise bleibt der Behälter 8 auch beim Betrieb der Tauchpumpe 12 gefüllt, so daß nur die ölmenge nachlaufen kann, die von der Tauchpumpe 12 entnommen wird. Nimmt nun durch den Betrieb der Tauchpumpe 12 die Höhe der schwimmenden Ölschicht immer mehr ab, so besteht die Gefahr, daß die Einlauföffnungen 11 die Grundwasseroberfläche 6 unterschneiden, so daß auch Wasser in den Behälter 8 eindringen kann. Um dies zu verhindern, ist unterhalb der Einlauföffnungen 11 eine Leitfähigkeitssonde 19 angeordnet, die bei Berührung mit Wasser die Tauchpumpe 12 abschaltet. Da die Höhe der Ölschicht 7 nun nicht mehr abnehmen kann, und die Lage des Behälters 8 an dem Flüssigkeitsspiegel 18 orientiert ist, kann nach dem Abschalten der Tauchpumpe 12 die Grundwasseroberfläche nicht mehr zu den Einlauföffnungen 11 gelangen. Zum erneuten Einschalten der Tauchpumpe 12 dient das reziproke Signal einer zweiten, weiter unten am Behälter 8 angeordneten Leitfähigkeitssonde 20.

Um im Falle einer Störung zu verhindern, daß in den Behälter 8 eingedrungenes Wasser in den Sammeltank 14 gefördert wird, wird mit einer Leitfähigkeitssonde 21 und einem Schaltmanometer 22 der Förderstrom in der Leitung 13 überwacht. Fällt der Druck ab und steigt die Leitfähigkeit an, so deutet dies auf einen erhöhten Wassergehalt hin und hat das abschalten der Pumpe 12 und das schließen des Sperrventils 15 zur Folge. Eine überlastung des Abscheiders 16 wird dadurch vermieden.

Im Brunnen 1 ist oberhalb der Tauchpumpe 2 ebenfalls eine Leitfähigkeitssonde 23 angeordnet, um die Pumpe 2 stillsetzen zu können, wenn der Flüssigkeitsspiegel 18 zu weit abgesunken ist und Gefahr besteht, daß Öl von der Pumpe 2 angesaugt wird.

Mit dem beschriebenen Verfahren und der beschriebenen Vorrichtung ist es auf einfache weise möglich, die bereits im Brunnen 1 erfolgte Trennung von Wasser und Öl zu nutzen und beide Medien getrennt zutage zu fördern. Das Öl kann unmittelbar mit einem Tankfahrzeug zu einer Ölaufbereitungsanlage gebracht werden und das weitgehend ölfreie Wasser läßt sich mit geringem Aufwand in einer Wasseraufbereitungsanlage reinigen.

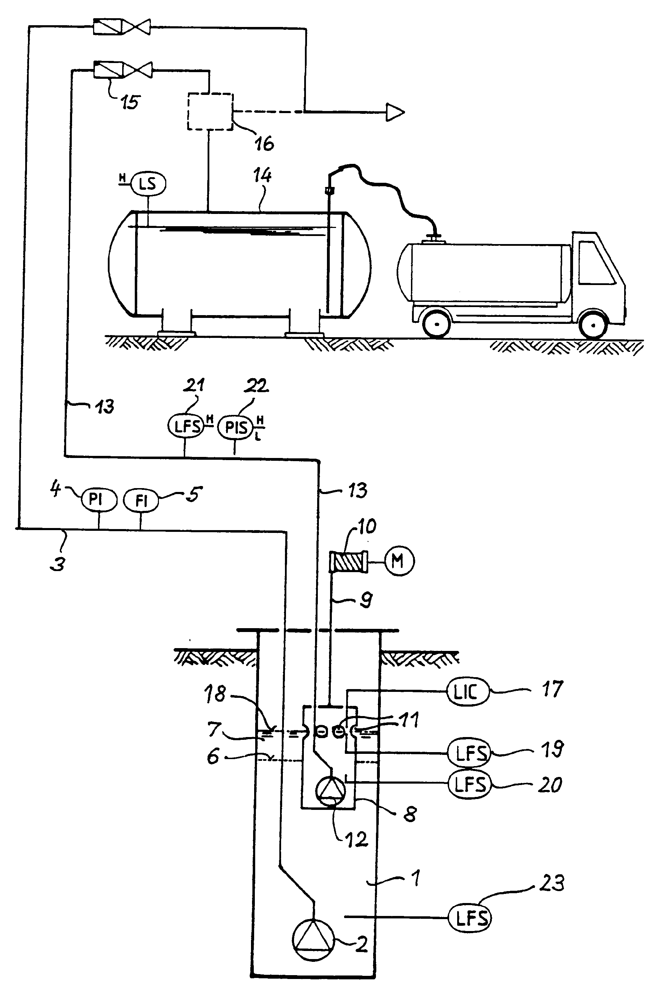

## Patentansprüche

1. Verfahren zum Entfernen einer auf einer Grundwasseroberfläche schwimmenden, flüssigen Phase, wobei in einem Brunnenschacht der Flüssigkeitsspiegel des Grundwassers durch kontinuierliches Abpumpen abgesenkt und die auf der Grundwasseroberfläche (6) schwimmende, flüssige Phase (7) aus einem in den Brunnenschacht mittels einer Hubvorrichtung abgesenkten becherartigen Behälter (8) mit oberhalb des Behälterbodens in der Behälterwand angeordneten Einlauföffnungen (11) abgepumpt wird, dadurch gekennzeichnet, daß die Höhenlage des Behälters (8) durch selbstätiges Nachfahren des Behälters (8) mit Hilfe der Hubvorrichtung (9,10) Änderungen des Niveaus der Grundwasseroberfläche (6) stetig derart angepaßt wird, daß die Einlauföffnungen des Behälters (8) den Flüssigkeitsspiegel (18) aber nicht den Grundwasserspiegel (6) um ein vorgegebenes Maß unterschneiden.

2. Vorrichtung zum Entfernen einer auf einer Grundwasseroberfläche schwimmenden, flüssigen Phase, wobei in einem Brunnenschacht der Flüssigkeitsspiegel des Grundwassers durch kontinuierliches Abpumpen (2) abgesenkt und die auf der Grundwasseroberfläche schwimmende, flüssige Phase mittels einer Pumpe aus einem an die Pumpe (12) angeschlossenen, im Brunnenschacht mittels einer Hubvorrichtung (9, 10) bewegbaren, becherartigen Behälter (8) mit oberhalb des Behälterbodens in der Behälterwand angeordneten Einlauföffnungen (11) abgezogen wird, dadurch gekennzeichnet, daß die Hubvorrichtung (9, 10) in Abhängigkeit vom Flüssigkeitsspiegel (18) im Brunnenschacht (1) mittels einer Meßvorrichtung (19) derart selbstätig steuerbar ist, daß die Einlauföffnungen (11) den Flüssigkeitsspiegel (18) kontinuierlich um ein vorgegebenes Maß unterschneiden.

3. Vorrichtung nach Anspruch 2, dadurch gekennzeichnet, daß der Behälter (8) an einer aus im Brunnenschacht (1) befestigten Seilen bestehenden Vertikalführung (9) gelagert ist.

4. Vorrichtung nach einem der Ansprüche 2 oder 3, dadurch gekennzeichnet, daß durch einen außen am Behälter (8) unterhalb der Einlauföffnungen (11) angeordneten, auf die Grundwasseroberfläche (6) ansprechenden Meßfühler (19) die Hubvorrichtung (9,10) im Sinne von "Heben" vorrangig steuerbar ist.

5. Vorrichtung nach einem der Ansprüche 2 bis 4, dadurch gekennzeichnet, daß eine außen am Behälter (8) angeordnete Meßvorrichtung (19) den Abstand der Grundwasseroberfläche (6) von der Unterkante der Einlauföffnungen (11) überwacht und daß bei Erreichen eines Mindestabstands das Abpumpen aus dem Behälter unterbrochen wird.

6. Vorrichtung nach Anspruch 5, dadurch gekennzeichnet, daß die Förderleistung der Pumpe (12) geringer ist als die Einlaufleistung an den Einlauföffnungen (11).

7. Vorrichtung nach Anspruch 5, dadurch gekennzeichnet, daß die Meßvorrichtung aus zwei übereinander angeordneten Leitfähigkeitsfühlern (19,20) besteht, wobei der obere, unterhalb den Einlauföffnungen (11) angeordnete Fühler (19) zum Abschalten der Pumpe (12) und der darunterliegende Fühler (20) mit invertiertem Signal zum Einschalten der Pumpe (12) dient.

8. Vorrichtung nach einem der Ansprüche 2 bis 7, dadurch gekennzeichnet, daß zur Steuerung der Hubvorrichtung (9,10) in Abhängigkeit vom Flüssigkeitsspiegel (18) an der Außenseite des Behälters (8) in Höhe der Einlauföffnungen (11) eine Füllstandsmeßvorrichtung (17) angeordnet ist.

9. Vorrichtung nach einem der Ansprüche 2 bis 8, dadurch gekennzeichnet, daß die Bewegungsgeschwindigkeit der Hubvorrichtung (9,10) direkt proportional zur Sollwert-Abweichung des gemessenen Flüssigkeitsstandes steuerbar ist.

10. Vorrichtung nach einem der Ansprüche 2 bis 9, dadurch gekennzeichnet, daß in dem Behälter (8) eine Tauchpumpe (12) angeordnet ist, deren Ausgang durch eine vorzugsweise flexible Förderleitung (13) mit einem übertage angeordneten Sammeltank (14) verbunden ist.

11. Vorrichtung nach einem der Ansprüche 2 bis 10, dadurch gekennzeichnet, daß an die Förderleitung (13) eine Leitfähigkeitssonde (21) und ein Schaltmanometer (22) angeschlossen sind und daß bei Überschreitung vorgegebener, durch die Leitfähigkeitssonde (21) oder das Schaltmanometer (22) gemessener Grenzwerte die Förderleitung (13) mit Hilfe eines fernsteuerbaren Sperrventils (15) sperrbar ist.

## Claims

1. A method for removing a liquid phase floating on a surface of groundwater, with the liquid level of the groundwater being lowered in a well by contiual pumping out, and the liquid phase (7) floating on the groundwater surface (6) being withdrawn by means of a pump from a bucket-shaped vessel (8) lowered down into the well by means of a lifting device and having inlet apertures (11) arranged above the vessel bottom in the vessel wall, characterized in that the vertical position of the vessel (8) being continually adapted to changes of the level of the ground water surface (6) by automatically following the vessel (8) by means of the lifting device (9, 10) such that the inlet apertures of the vessel (8) are maintained below the liquid level (18), but not below the groundwater surface (6) by a predetermined amount.

2. An apparatus for removing a liquid phase floating on a surface of groundwater, with the liquid level of the groundwater being lowered in a well by continual pumping out, and the liquid phase (7) floating on the groundwater surface (6) being withdrawn from a bucket-shaped vessel (8) by means of a pump (12) connected thereto, said bucket-shaped vessel (8) being movable in the well by means of lifting device (9, 10) and having an inlet aperture (11) arranged above the vessel bottom in the vessel wall, characterized in that the lifting device is automatically controllable in dependence upon the liquid level (18) in the well (1) by means of a measuring device (19), such that the inlet apertures (11) are continuously maintained below the liquid level (18) by a predetermined amount.

3. The apparatus as claimed in claim 2, characterized in that the vessel (8) is supported by a vertical guiding means comprising cables fastened in the well (1).

4. The apparatus as claimed in any one of the claims 2 or 3, characterized in that a sensor (19) which responds to the groundwater surface (6) and is arranged on the outside of the vessel below the inlet aperture (11) is adapted to perform a priority control of the lifting device (9, 10) in the sense of a "lifting action".

5. The apparatus as claimed in any one of the claims 2 to 4, characterized in that a measuring device (19) arranged on the outside of the vessel (8) monitors the distance of the groundwater surface (6) from the bottom edge of the inlet aperture (11), and that the pumping operation from the vessel is interrupted on attainment of a minimum distance.

6. The apparatus as claimed in claim 5, characterized in that the capacity of the pump (12) is lower than the admission capacity at the inlet aperture (11).

7. The apparatus as claimed in claim 5, characterized in that the measuring device is comprised of two superposed conductivity sensors (19, 20), with the upper sensor (19) which is arranged below the inlet aperture (11) serving the function of deactivating the pump (12), while the lower sensor (20) serves to reactivate the pump (12) with inverse signal.

8. The apparatus as claimed in any one of the claims 2 to 7, characterized in that a liquid level measuring device (17) is arranged on the outside of the vessel (8) at the level of the inlet aperture (11) to control the lifting device (9, 10) in dependence upon the liquid level (18).

9. The apparatus as claimed in any one of the claims 2 to 8, characterized in that the rate of motion of the lifting device (9, 10) is adapted to be controlled in direct proportion to the deviation of the measured liquid level from the desired liquid level.

10. The apparatus as claimed in any one of the claims 2 to 9, characterized in that a submergible pump (12) is arranged in the vessel (8), the pump outlet being connected, through a preferably flexible discharge conduit (13), to a collecting tank (14) provided above ground.

11. The apparatus as claimed in any one of the claims 2 to 10, characterized in that pressure and conductivity are measured in the discharge conduit (13) of the pump (12), and that the conduit (13) is adapted to be shut off by means of a remote-control valve (15) when predetermined limits are exceeded.

## Revendications

1. Procédé pour enlever une phase liquide flottant sur une nappe d'eau souterraine, étant précisé que le niveau de liquide de la nappe d'eau souterraine est abaissé dans un puits grâce à un pompage continu, et que la phase liquide (7) flottant sur la nappe d'eau souterraine (6) est évacuée, par pompage, d'un récipient en forme de gobelet (8) qui est abaissé dans le puits à l'aide d'un dispositif de levage et comporte des orifices d'entrée (11) disposés dans la paroi dudit récipient, au-dessus du fond de celui-ci, caractérisé en ce que, grâce à un déplacement consécutif automatique du récipient (8) à l'aide du dispositif de levage (9, 10), la hauteur du récipient (8) est adaptée en permanence à des variations du niveau de la nappe d'eau souterraine (6) pour que les orifices d'entrée dudit récipient (8) coïncident sur une distance prédéfinie avec le niveau de liquide (18), mais pas avec le niveau d'eau souterraine (6).

2. Dispositif pour enlever une phase liquide flottant sur une nappe d'eau souterraine, étant précisé que le niveau de liquide de la nappe d'eau souterraine est abaissé dans un puits grâce à un pompage continu (2), et que la phase liquide flottant sur la nappe d'eau souterraine est extraite, à l'aide d'une pompe, d'un récipient en forme de gobelet (8) qui est apte à être déplacé dans le puits à l'aide d'un dispositif de levage (9, 10) et est relié à la pompe (12), et qui comporte des orifices d'entrée (11) disposés dans la paroi du récipient, au-dessus du fond de celui-ci, caractérisé en ce que, à l'aide d'un dispositif de mesure (19), le dispositif de levage (9, 10) est apte à être commandé automatiquement en fonction du niveau de liquide (18) dans le puits (1), pour que les orifices l'entrée (11) coïncident continuellement avec le niveau de liquide (18) sur une distance prédéfinie.

3. Dispositif selon la revendication 2, caractérisé en ce que le récipient (8) est monté au niveau d'un guidage vertical (9) composé de cables fixés dans le puits (1),

4. Dispositif selon l'une des revendications 2 ou 3, caractérisé en ce que, grâce à un capteur (19) disposé à l'extérieur du récipient (8), au-dessous des orifices d'entrée (11), et réagissant a la nappe d'eau souterraine (6), le dispositif de levage (9, 10) est apte à être commandé en priorité dans le sens d'un "levage".

5. Dispositif selon l'une des revendications 2 à 4, caractérisé en ce qu'un dispositif de mesure (19) disposé à l'extérieur du récipient (8) contrôle l'écartement entre la nappe d'eau souterraine (6) et le bord inférieur des orifices d'entrée (11), et en ce que le pompage hors du récipient est interrompu lorsqu'un écartement minimum est atteint.

6. Dispositif selon la revendication 5, caractérisé en ce que la capacité de refoulement de la pompe (12) est inférieure à la capacité d'entrée au niveau des orifices d'entrée (11).

7. Dispositif selon la revendication 5, caractérisé en ce que le dispositif de mesure se compose de deux capteurs de conductibilité (19, 20) superposés, le capteur supérieur (19) disposé au-dessous des orifices d'entrée (11) servant à arrêter la pompe (12) tandis que le capteur (20) situé sous le capteur (19) sert, avec un signal inversé, à mettre en marche la pompe (12).

8. Dispositif selon l'une des revendications 2 à 7, caractérisé en ce que, pour la commande du dispositif de levage (9, 10) en fonction du niveau de liquide (18), un dispositif de mesure de niveau (17) est disposé sur l'extérieur du récipient (8), à la hauteur des orifices d'entrée (11).

9. Dispositif selon l'une des revendications 2 à 8, caractérisé en ce que la vitesse de déplacement du dispositif de levage (9, 10) est apte à être commandée de façon directement proportionnelle à l'écart par rapport à la valeur théorique du niveau de liquide mesure.

10. Dispositif selon l'une des revendications 2 à 9, caractérisé en ce qu'il est prévu, dans le récipient (8), une pompe plongeante (12) dont la sortie est reliée, par une conduite de refoulement (13) de préférence flexible, à une citerne (14) disposée en surface.

11. Dispositif selon l'une des revendications 2 à 10, caractérisé en ce qu'une sonde de conductibilité (21) et un manomètre de commutation (22) sont reliés à la conduite de refoulement (13), et en ce que, si des valeurs limites prédéfinies mesurées par la sonde de conductibilité (21) ou par le manomètre de commutation (22) sont dépassées, la conduite de refoulement (13) peut être bloquée à l'aide d'une soupape (15) apte à être télécommandée.
